# EUROPEAN PATENT APPLICATION

(11) **EP 1 741 944 A1**
(43) Date of publication of application: **10.01.2007**
(21) Application number: 05727503.4
(22) Date of filing: 28.03.2005
(51) Int. Cl.: F16C 33/48, F16C 19/38, F16C 33/64, F16C 33/66

(54) **SELF-ALIGNING ROLLER BEARING**

(30) Priority: 26.03.2004 JP 2004092988
(71) Applicant: NSK Steering Systems Co. Ltd, Shinagawa-ku, Tokyo 141-8560 (JP)
(72) Inventor: Bekku, Mikio, NSK LTD., Fujisawa-shi, Kanagawa 2510021 (JP)
(74) Representative: Cross, James Peter Archibald
(86) International application number: PCT/JP2005/006529
(87) International publication number: WO 2005/093273

(57) **Abstract**

In a spherical roller bearing, a flange 9 of a cage 4 has a more increased maximum diameter than in the prior art. One-sided face of the diameter-increased flange 9 is formed, per spherical roller having a large area, with a single protruded portion 20 so as to extend in a peripheral direction. A front side edge face of the protruded portion 20 having the large area gets vicinal to or slidably abut on a head of the single spherical roller 3. The flange 9 of the cage 4, since the protruded portion 20 having the large area is provided on the side of the head of the spherical roller 3, has an increased proportion of area slidably abutting on or brought into contact with the head of the spherical roller 3, and, when the spherical roller 3 gets skewed, the posture of the spherical roller 3 can be controlled further stably.

## Description

### Technical field

The present invention relates to a self-aligning roller bearing that is assembled into various types of machines and devices and bears a rotary shaft having a comparatively heavy weight.

### Background Arts

FIG. 10 is a sectional view of the self-aligning roller bearing according to the prior art.

FIG. 11A is an enlarged sectional view (taken along the line XIa-XIa in FIG. 13) of a cage depicted in FIG. 10. FIG. 11B is an enlarged sectional view of an encircled portion b in FIG. 11A.

FIG. 12A is a view taken along the arrowhead line XII in FIG. 11A. FIG. 12B is an enlarged sectional view of an encircled portion c in FIG. 12A.

FIG. 13 is a view taken along the arrowhead line XIII in FIG. 11A.

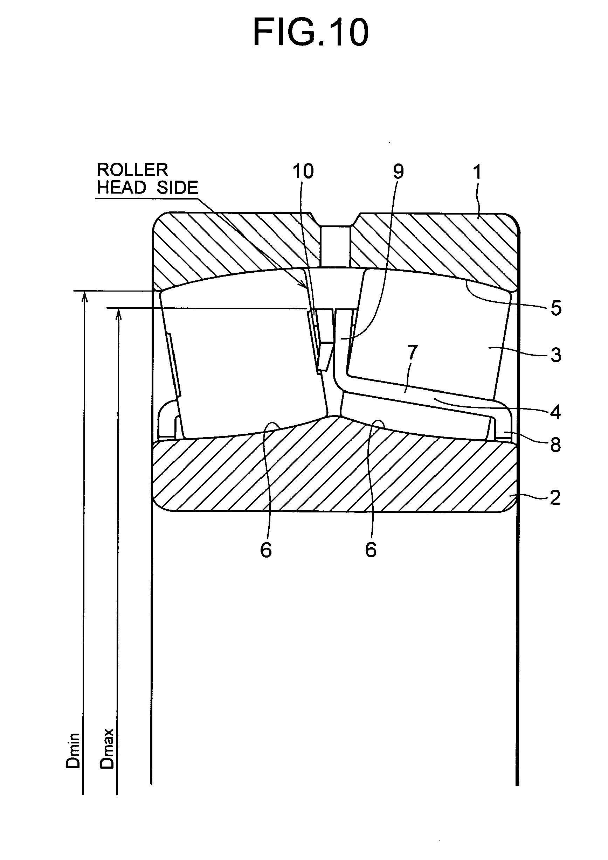

The self-aligning roller bearing is, as illustrated in FIG. 10, constructed of an outer ring 1, an inner ring 2, 2-row spherical rollers 3, 3 disposed between these outer and inner raceways, and cages 4, 4 that hold the spherical rollers 3, 3.

The outer ring 1 has a raceway face 5 taking a singly circular arc formed along an inner periphery. Further, the inner ring 2 is fixed to a rotary shaft (unillustrated) at its inner periphery, and an outer periphery of this inner ring 2 is formed with two circular-arc-shaped raceway faces 6, 6 facing the raceway face 5 of the outer ring 1 at a predetermined interval in a central portion in an axis-direction.

The two rows of spherical rollers 3, 3 are interposed between the raceway face 5 of the outer ring 1 and the raceway faces 6, 6 of the inner ring 2, respectively. These two rows of spherical rollers 3, 3 are held by the cages 4, 4.

The cage 4 integrally includes an extending portion 7 extending substantially in the axis-direction of the spherical roller 3, an extending portion 8 extending on the outer side in the axis-direction and inwardly in a radial direction, and a flange 9 (central portion) extending at the central portion in the axis-direction of the bearing and outwardly in the radial direction.

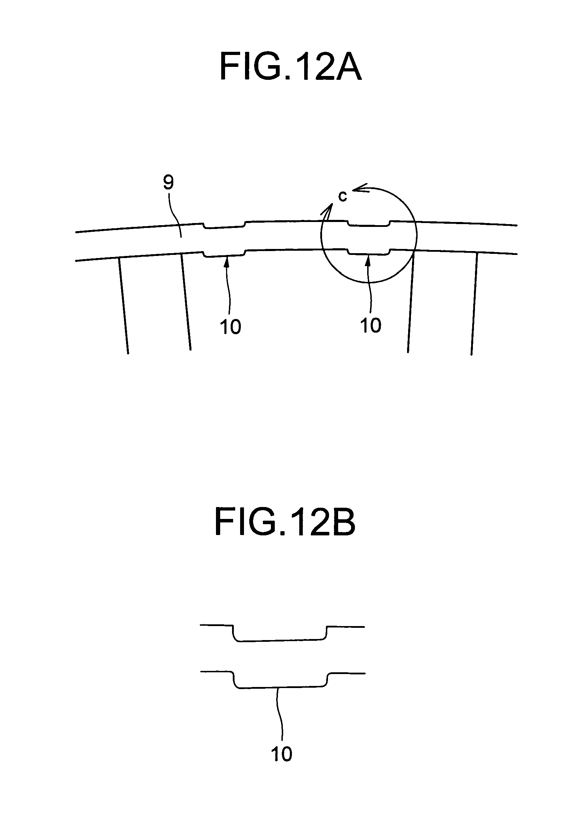

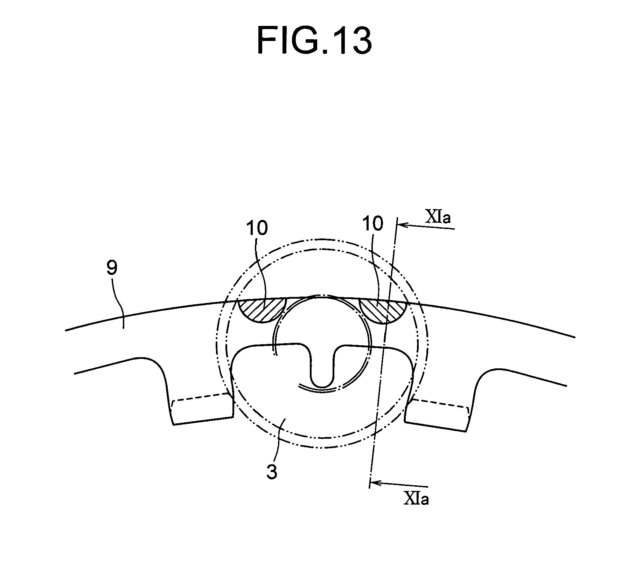

As depicted in FIGS. 12A, 12B and 13, one-sided face of the flange 9 is formed with a pair of protruded portions 10, 10 spaced away from each other in a peripheral direction.

Front side edge faces of the pair of protruded portions 10, 10 get vicinal to or slidably abut on a head of the single spherical roller 3, i.e., a side edge face of the inside of the bearing of the spherical roller 3, preferably an outer ring sided portion of the bearing from the center of this side edge face, whereby a skew of the spherical roller 3 is prevented in a way that controls a posture of the spherical roller 3 if the spherical roller 3 gets skewed when rotating.

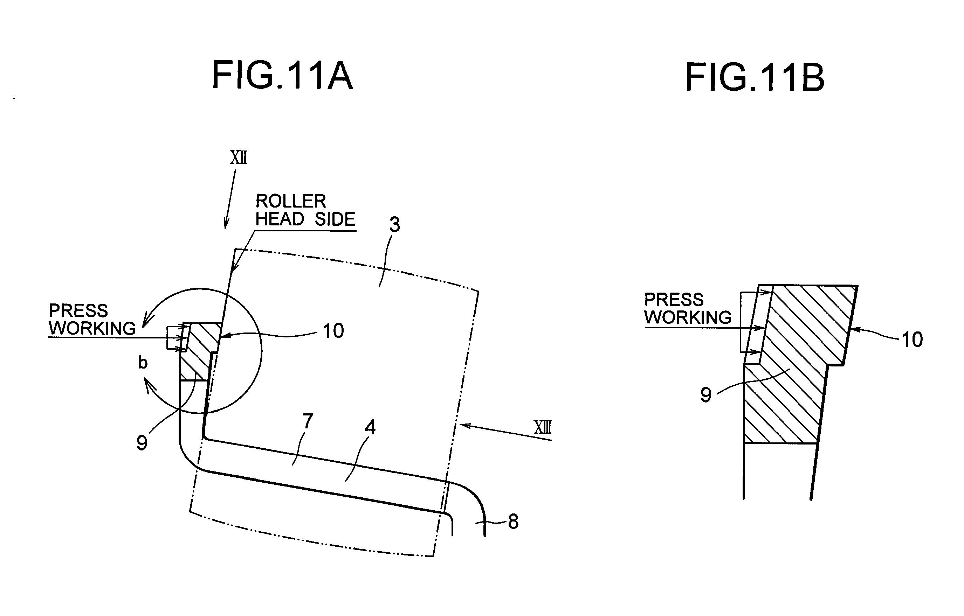

Further, as shown in FIGS. 11A and 11B, the protruded portion 10 is formed by press working that presses the rear face thereof.

In FIG. 10, Dmin represents a minimum inside diameter of the outer ring, and Dmax designates a maximum outside diameter of the flange 9.

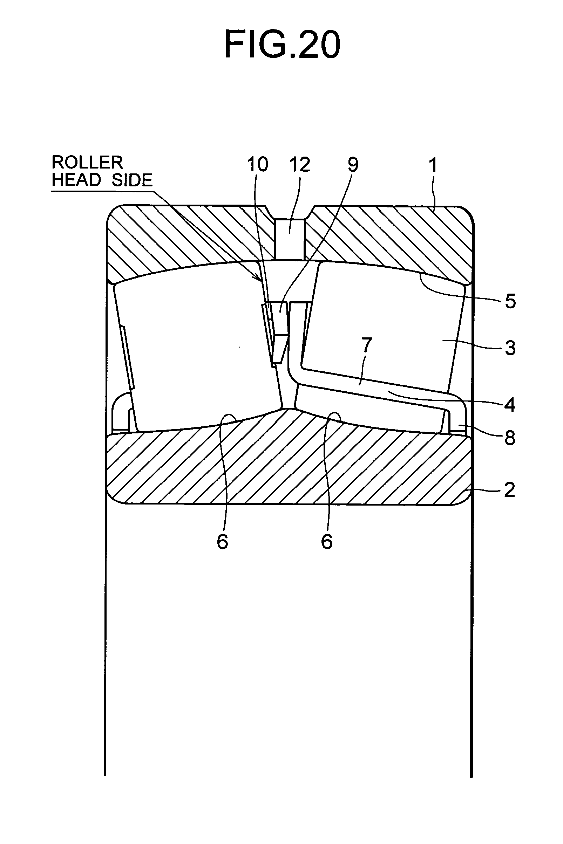

FIG. 20 is a sectional view of the self-aligning roller bearing according to the prior art.

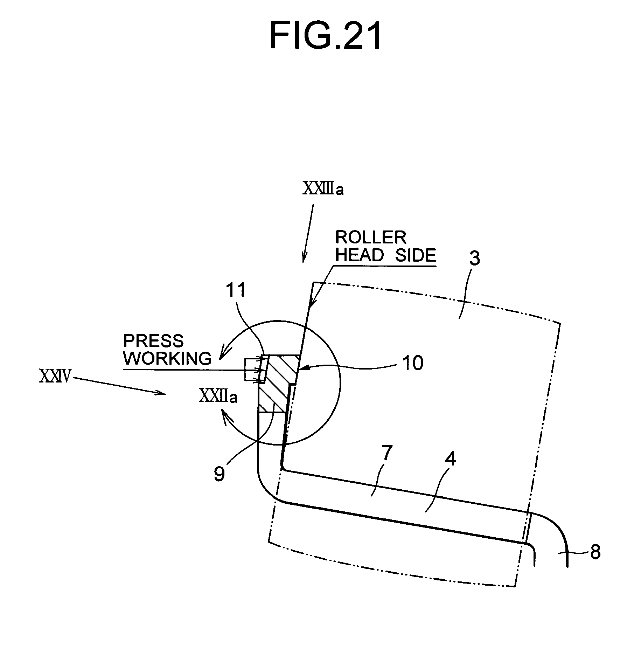

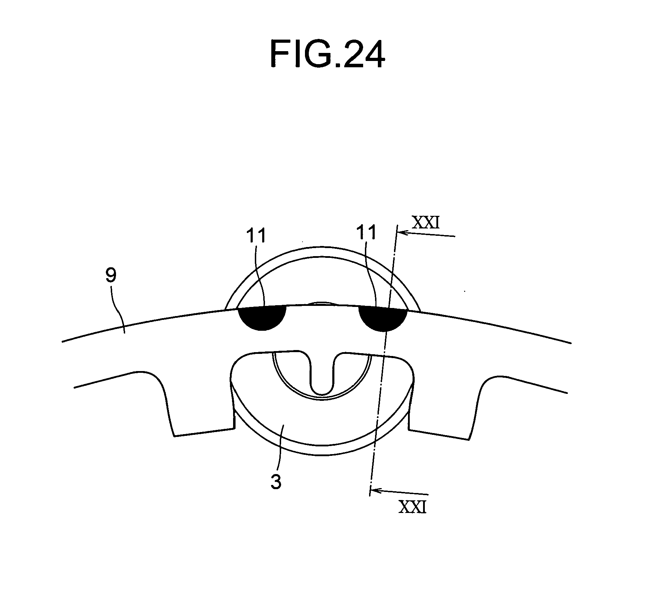

FIG. 21 is an enlarged sectional view (taken along the line XXI-XXI in FIG. 24) of the cage shown in FIG. 20.

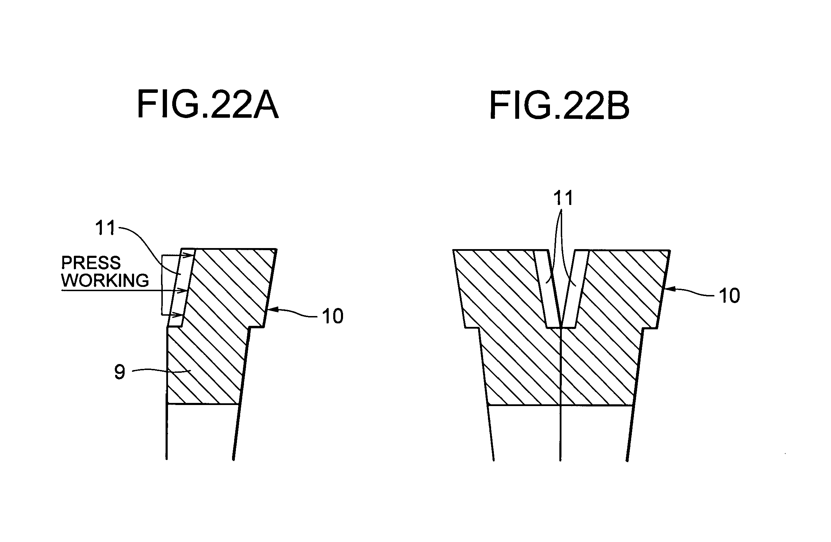

FIG. 22A is an enlarged sectional view of an encircled portion XXIIa in FIG. 21. FIG. 22B is an enlarged sectional view of the flanges that are disposed in a face-to-face relationship with each other as illustrated in FIG. 20.

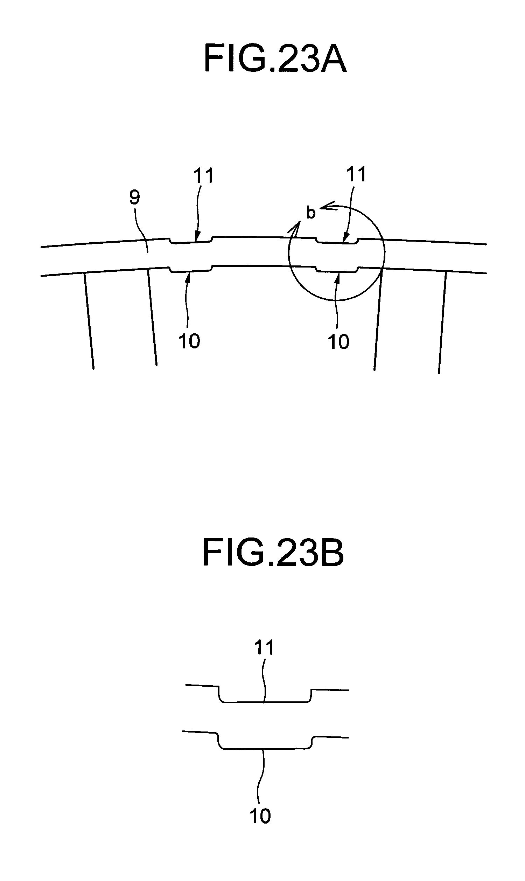

FIG. 23A is a view taken along the arrowhead line XXIIIa in FIG. 21. FIG. 23B is an enlarged view of an encircled portion b in FIG. 23A.

FIG. 24 is a view taken along the arrowhead line XXIV in FIG. 21.

The self-aligning roller bearing depicted in FIGS. 20 through 24 has the same basic structure as the structure shown in FIGS. 10 through 13, and hence the discussion will be focused on different points therebetween.

The self-aligning roller bearing used under severe working conditions such as high-speed rotations involves employing a [circulation oil supply method], wherein oil is supplied via an oil supply hole 12 bored in the radial direction in the central portion of the outer ring 1 in order to supply the bearing with the oil.

A recessed portion 11 is provided on the rear face side of the protruded portion 10 formed by the press working. As shown in FIG. 22B, a lubricant flows in between the pair of recessed portions 11, 11 via the oil supply hole 12 of the outer ring 1. The pair of recessed portions 11, 11 does not, however, extend through up to the inside diameter side from the outside diameter side.

This type of prior art is known from, e.g., Japanese Patent Application Laid-Open Publication No.8-296653.

In the self-aligning roller bearing illustrated in FIGS 10 through 13, however, a surface area of the protruded portion 10 is comparatively small, and it is therefore required that the area of the protruded portion 10 be expanded in order to attain further stability because of the portion slidably abutting on or brought into contact with the head of the spherical roller 3 being small if the spherical roller 3 gets skewed when rotating.

Moreover, under the severe conditions (such as a large thrust load, large vibrations and lubrication (lubricant) contaminated with foreign matters), the protruded portion 10, though its abrasion causes a problem, is small and is therefore easy to abrade.

Further, in the self-aligning roller bearing depicted in FIGS. 20 through 24, the pair of recessed portions 11, 11 does not extend through the inside diameter side from the outside diameter side, and hence it might happen that the lubricant does not sufficiently reach the raceway face 6 of the inner ring 2.

### Disclosure of the Invention

It is an object of the present invention, which was devised under such circumstances, to provide a self-aligning roller bearing capable of surely preventing, when the spherical roller gets skewed, the skew by further stably controlling a posture of the spherical roller, and capable of attaining a long life thereof by reducing emission of heat and abrasion when the bearing rotates.

It is another object of the present invention to provide a self-aligning roller bearing capable of further improving lubricating performance by stably supplying a lubricant to a raceway face of an inner ring, and capable of attaining the long life thereof by reducing the emission of the heat and the abrasion when the bearing rotates.

To accomplish the above objects, according to a first aspect of the present invention, a self-aligning roller bearing comprises an outer ring having a raceway taking a shape of circular arc and formed along its inner periphery, an inner ring having a raceway disposed in a face-to-face relationship with the inner periphery sided raceway face of the outer ring and formed along its outer periphery, two rows of spherical rollers interposed between the inner periphery sided raceway face of the outer ring and the outer periphery sided raceway face of the inner ring, and a cage holding the two rows of spherical rollers, wherein a flange of the cage includes a protruded portion having a large area on the side of a head of the spherical roller.

In the self-aligning roller bearing according to the first aspect of the present invention, it is preferable that the protruded portion is formed by press working.

In the self-aligning roller bearing according to the first aspect of the present invention, it is preferable that the protruded portion is formed in a shape of petals protruding toward an outside diameter by punching out a blank in the shape of petals when conducting a press punching work.

In the self-aligning roller bearing according to the first aspect of the present invention, it is preferable that if a minimum inside diameter of the outer ring is larger than a flange maximum diameter of the cage, the cage is formed in such a shape that part of the flange maximum diametrical portion is cut off.

According to a second aspect of the present invention, a self-aligning roller bearing comprises an outer ring having a raceway taking a shape of circular arc and formed along its inner periphery, an inner ring having a raceway disposed in a face-to-face relationship with the inner periphery sided raceway face of the outer ring and formed along its outer periphery, two rows of spherical rollers interposed between the inner periphery sided raceway face of the outer ring and the outer periphery sided raceway face of the inner ring, and a cage holding the two rows of spherical rollers, a central portion of the outer ring being formed with an oil supply hole, for supplying oil, extending in a radial direction, wherein a flange of the cage includes a protruded portion on the side of a head of the spherical roller, and a recessed portion formed in a rear face of the protruded portion communicates with the oil supply hole of the outer ring and extends through up to an inside diameter side from an outside diameter side.

In the self-aligning roller bearing according to the second aspect of the present invention, it is preferable that the protruded portion or the recessed portion is formed by press working.

As explained so far, according to the present invention, the flange of the cage, since the protruded portion having the large area is provided on the side of the head of the spherical roller, has an increased proportion of area slidably abutting on (brought into contact with) the head of the spherical roller, and it is possible to surely prevent, when the spherical roller gets skewed, the skew by further stably controlling the posture of the spherical roller, and to attain a long life thereof t by reducing the emission of the heat and the abrasion when the bearing rotates.

Moreover, according to the present invention, the recessed portion formed in the rear face of the protruded portion communicates with the oil supply hole of the outer ring and extends through up to the inside diameter side from the outside diameter side, and hence the lubricant supplied via the oil supply hole of the outer ring can be supplied stably to the raceway face of the inner ring via the through-portion of the recessed portions. This enables lubricating performance to be further improved and the long life thereof to be attained by reducing the emission of the heat and the abrasion when the bearing rotates.

### Brief Description of the Drawings

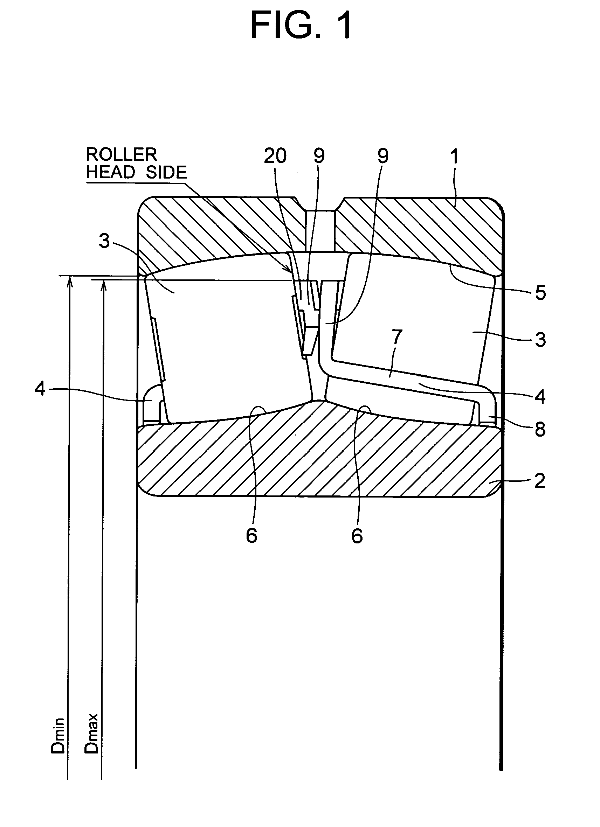

FIG. 1 is a sectional view of a self-aligning roller bearing according to a first embodiment of the present invention;

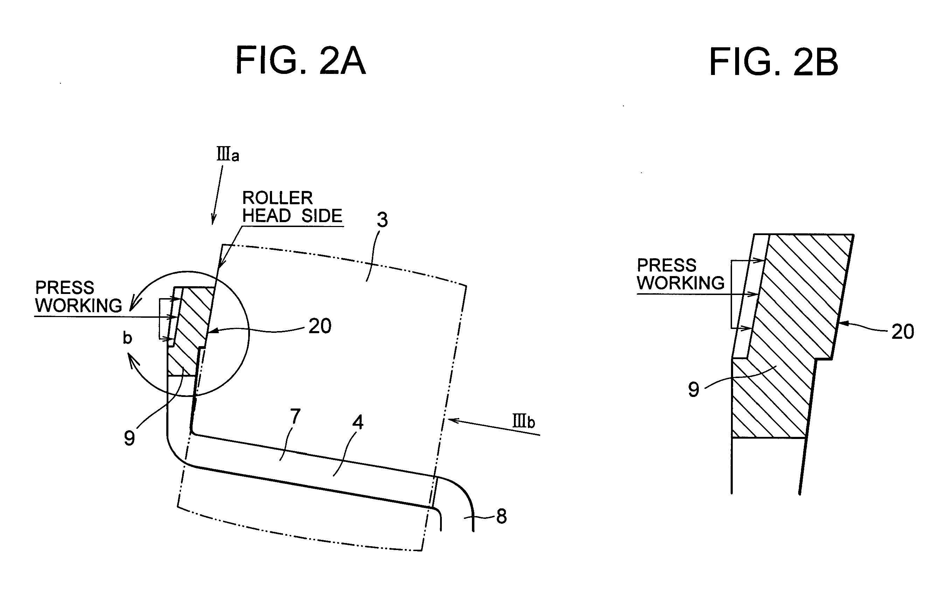

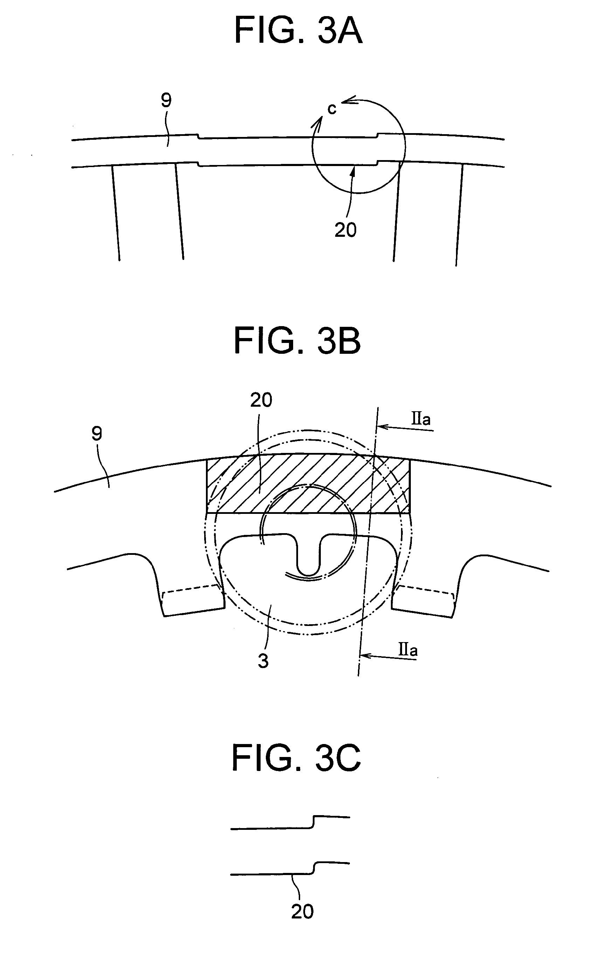

FIG. 2A is an enlarged sectional view (taken along the line IIa-IIa in FIG. 3B) of a cage shown in FIG. 1; FIG. 2B is an enlarged sectional view of an encircled portion b in FIG. 2A;
FIG. 3A is a view taken along the arrowhead line IIIa in FIG. 2A; FIG. 3B is a view taken along the arrowhead line IIIb in FIG. 2A; FIG. 3C is an enlarged view of an encircled portion c in FIG. 3A.

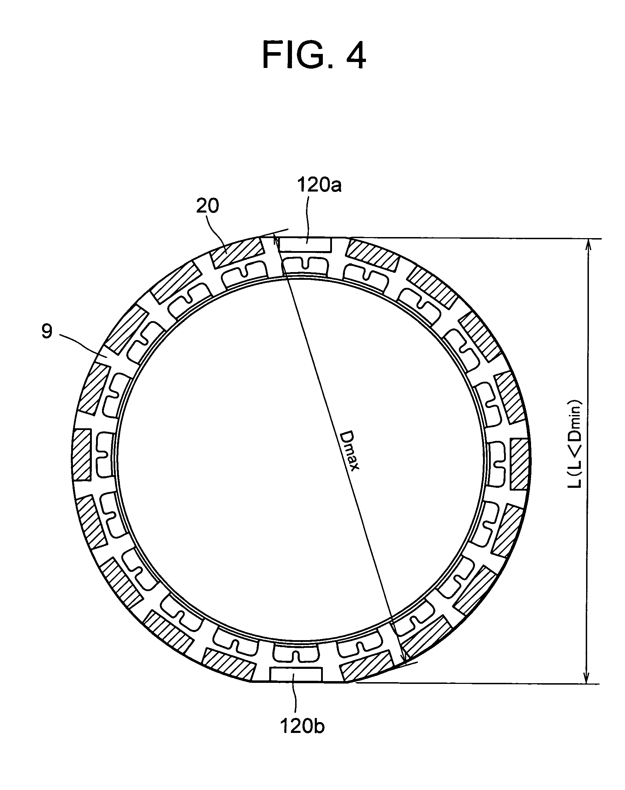

FIG. 4 is a schematic view of the cage depicted in FIG. 1;

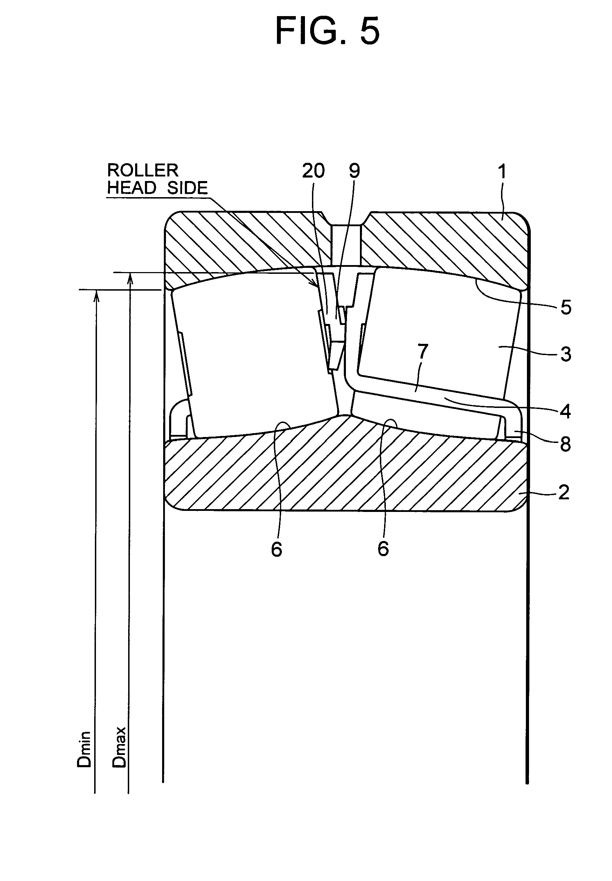

FIG. 5 is a sectional view of the self-aligning roller bearing according to a second embodiment of the present invention;

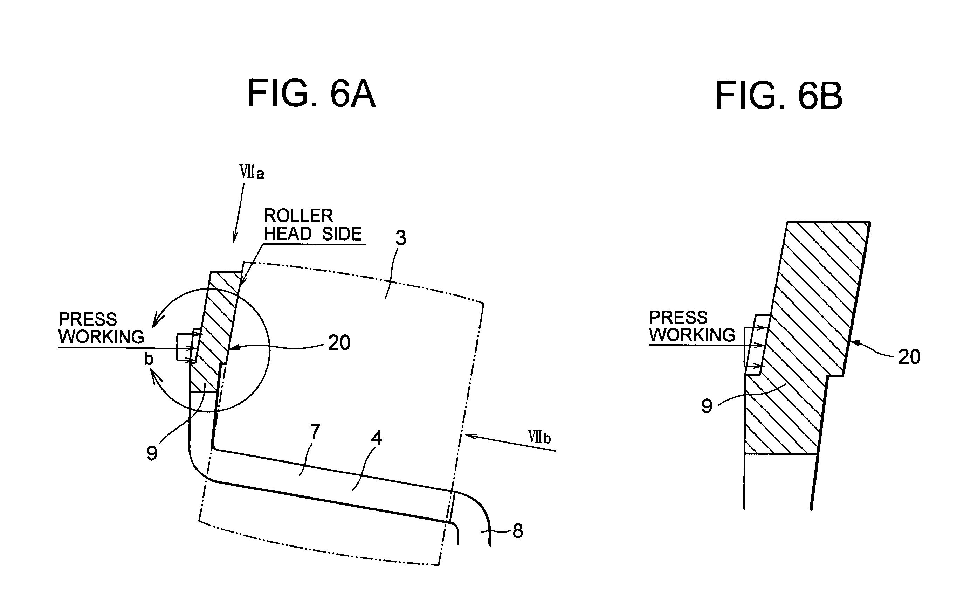

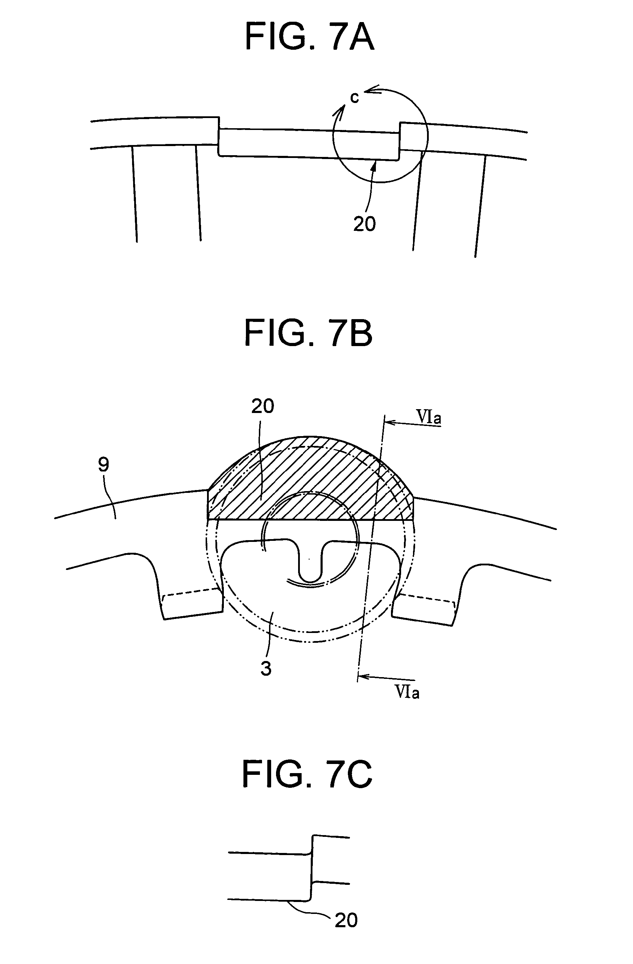

FIG. 6A is an enlarged sectional view (taken along the line VIa-VIa in FIG. 7B) of the cage shown in FIG. 5; FIG. 6B is an enlarged sectional view of an encircled portion b in FIG. 6A;
FIG. 7A is a view taken along the arrowhead line VIIa in FIG. 6A; FIG. 7B is a view taken along the arrowhead line VIIb in FIG. 6A; FIG. 7C is an enlarged view of an encircled portion c in FIG. 7A;

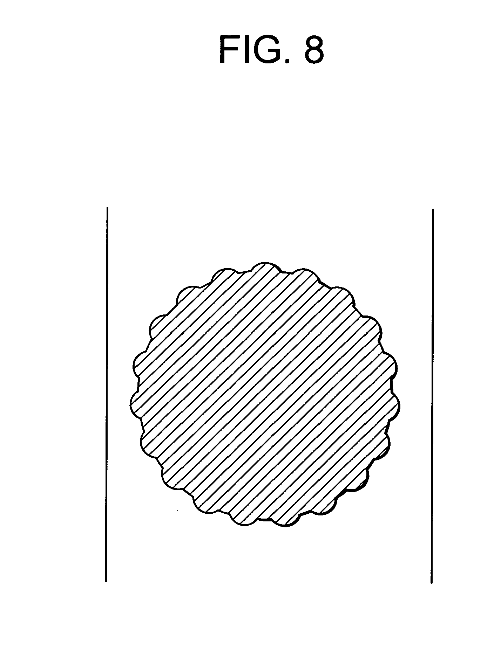

FIG. 8 is a schematic view of a blank press punch-out configuration of the cage;

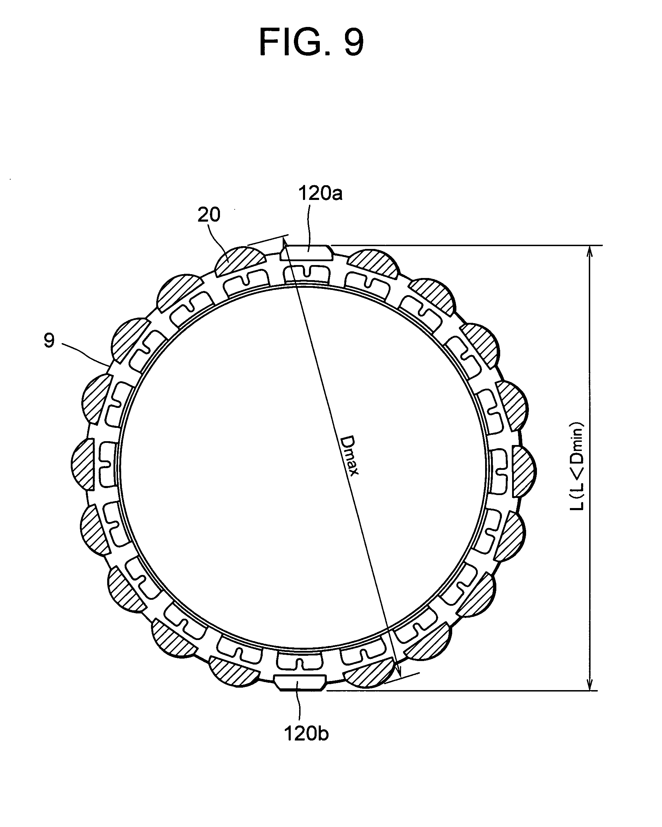

FIG. 9 is a schematic view of the cage depicted in FIG. 5;
FIG. 10 is a sectional view of the self-aligning roller bearing according to the prior art;
FIG. 11A is an enlarged sectional view (taken along the line XIa-XIa in FIG. 13) of a cage depicted in FIG. 10; FIG. 11B is an enlarged sectional view of an encircled portion b in FIG. 11A;
FIG. 12A is a view taken along the arrowhead line XII in FIG. 11A; FIG. 12B is an enlarged sectional view of an encircled portion c in FIG. 12A;
FIG. 13 is a view taken along the arrowhead line XIII in FIG. 11A;

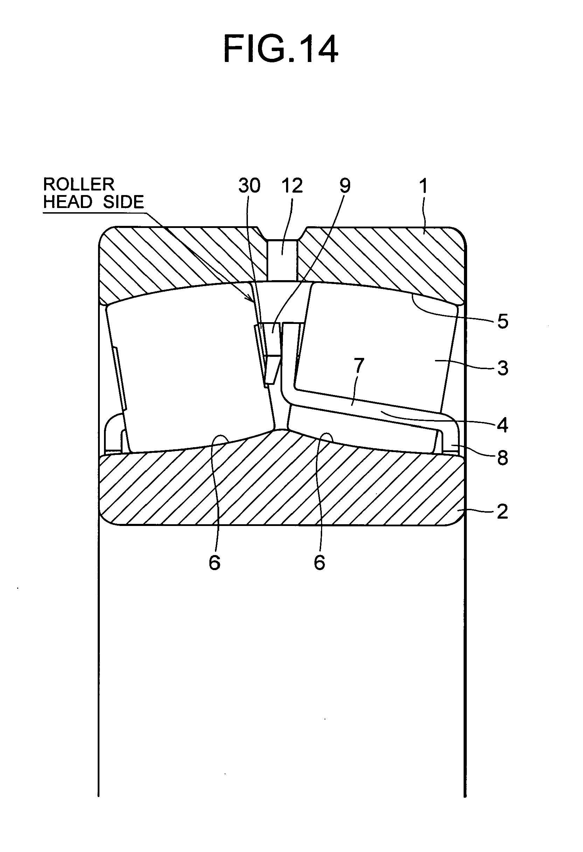

FIG. 14 is a sectional view of the self-aligning roller bearing according to a third embodiment of the present invention;

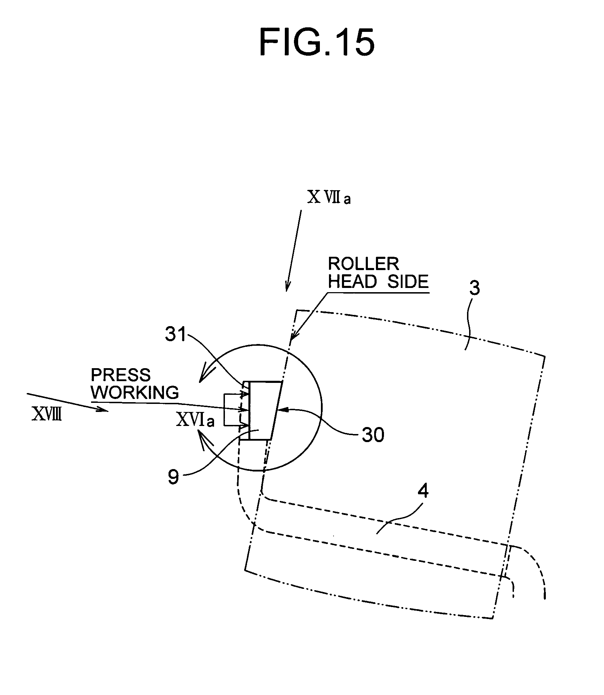

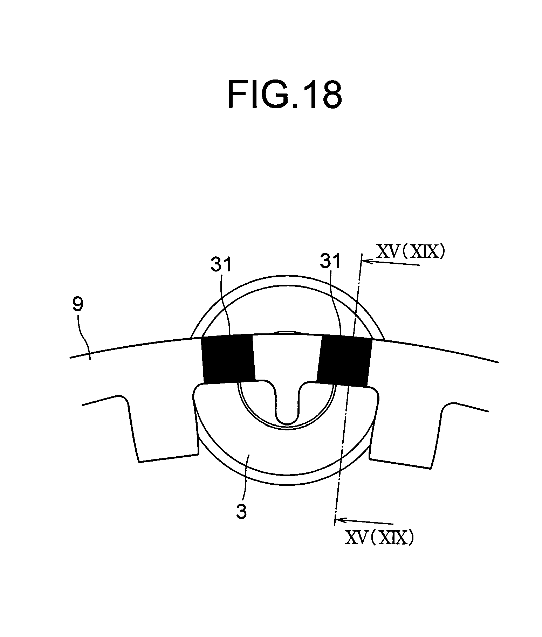

FIG. 15 is an enlarged sectional view (taken along the line XV-XV in FIG. 18) of the cage shown in FIG. 14;

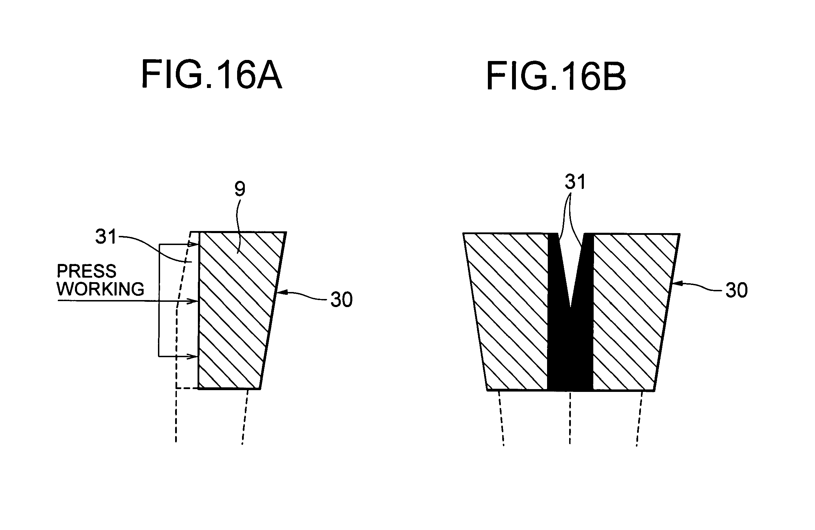

FIG. 16A is an enlarged sectional view of an encircled portion XVIa in FIG. 15; FIG. 16B is an enlarged sectional view of the flanges disposed in a face-to-face relationship with each other as shown in FIG. 14;

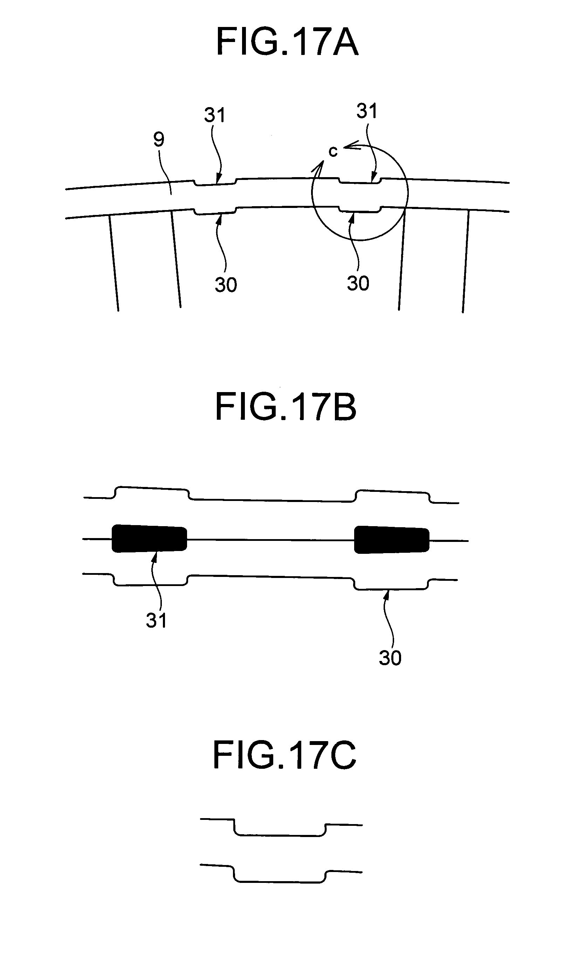

FIG. 17A is a view taken along the arrowhead line XVIIa in FIG. 15; FIG. 17B is an enlarged sectional view of the flanges disposed in the face-to-face relationship with each other as shown in FIG. 14; FIG. 17C is an enlarged view of an encircled portion c in FIG. 17A;
FIG. 18 is a view taken along the arrowhead line XVIII in FIG. 15;

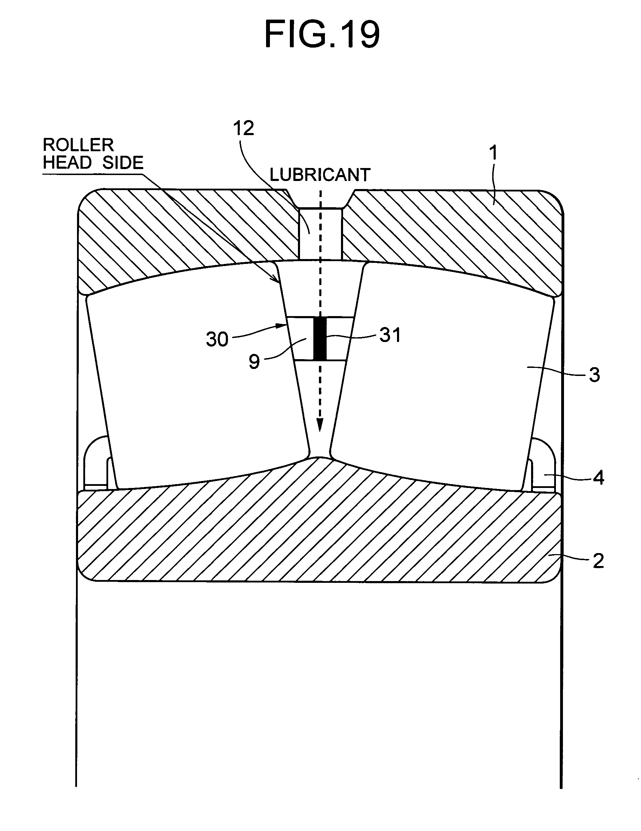

FIG. 19 is a sectional view (taken along the line XIX-XIX in FIG. 18) of the self-aligning roller bearing according to a third embodiment of the present invention;
FIG. 20 is a sectional view of the self-aligning roller bearing according to the prior art;
FIG. 21 is an enlarged sectional view (taken along the line XXI-XXI in FIG. 24) of the cage shown in FIG. 20;
FIG. 22A is an enlarged sectional view of an encircled portion XXIIa in FIG. 21; FIG. 22B is an enlarged sectional view of the flanges disposed in the face-to-face relationship with each other as illustrated in FIG. 20;
FIG. 23A is a view taken along the arrowhead line XXIIIa in FIG. 21; FIG. 23B is an enlarged view of an encircled portion b in FIG. 23A; and
FIG. 24 is a view taken along the arrowhead line XXIV in FIG. 21.

### Best Mode for Carrying out the Invention

A self-aligning roller bearing according to embodiments of the present invention will hereinafter be described with reference to the drawings.

### (First Embodiment)

FIG. 1 is a sectional view of the self-aligning roller bearing according to a first embodiment of the present invention.

FIG. 2A is an enlarged sectional view (taken along the line IIa-IIa in FIG. 3B) of a cage shown in FIG. 1. FIG. 2B is an enlarged sectional view of an encircled portion b in FIG. 2A.

FIG. 3A is a view taken along the arrowhead line IIIa in FIG. 2A. FIG. 3B is a view taken along the arrowhead line IIIb in FIG. 2A. FIG. 3C is an enlarged view of an encircled portion c in FIG. 3A.

FIG. 4 is a schematic view of the cage depicted in FIG. 1.

The self-aligning roller bearing is, as illustrated in FIG. 1, constructed of an outer ring 1, an inner ring 2, 2-row spherical rollers 3, 3 disposed between these outer and inner rings, and cages 4, 4 that hold the spherical rollers 3, 3.

The outer ring 1 has a raceway face 5 taking a singly circular arc formed along an inner periphery. Further, the inner ring 2 is fixed to a rotary shaft (unillustrated) at its inner periphery, and an outer periphery of this inner ring 2 is formed with two circular-arc-shaped raceway faces 6, 6 facing the raceway face 5 of the outer ring 1 at a predetermined interval in a central portion in an axis-direction.

The two rows of spherical rollers 3, 3 are interposed between the raceway face 5 of the outer ring 1 and the raceway faces 6, 6 of the inner ring 2, respectively. These two rows of spherical rollers 3, 3 are held by the cages 4, 4.

Each cage 4 integrally includes an extending portion 7 extending substantially in the axis-direction of the spherical roller 3, an extending portion 8 extending on the outer side in the axis-direction and inwardly in a radial direction, and a flange 9 (central portion) extending at the central portion in the axis-direction of the bearing and outwardly in the radial direction.

In the first embodiment, as shown in FIG. 1, the flange 9 has a maximum diameter Dmax that is set longer than in the prior art illustrated in FIG. 10. As a result, such a case might occur that the maximum diameter Dmax of the flange 9 gets, as will be explained in detail later on, larger than a minimum inside diameter Dmin of the outer ring 1.

Further, as shown in FIGS. 2A and 2B and FIGS. 3A - 3C, a single protruded portion 20 is formed, per spherical roller having a large area, so as to extend in a peripheral direction on a one-sided face of the diameter-increased flange 9.

A front side edge face of the protruded portion 20 having the large area gets vicinal to or slidably abuts on a head of the single spherical roller 3 (which represents, in this specification, a side edge face on the inside of the bearing of the spherical roller 3), preferably an outer ring sided portion of the bearing from the center of this side edge face, whereby a skew of the spherical roller 3 is prevented in a way that controls a posture of the spherical roller 3 if the spherical roller 3 gets skewed when rotating.

Further, as illustrated in FIGS. 2A and 2B, the protruded portion 20 having the large area is formed by press working that presses the rear face thereof.

Accordingly, the flange 9 of the cage 4, since the protruded portion 20 having the large area is provided in the vicinity of the head of the spherical roller 3, has an increased proportion of area slidably abutting on (brought into contact with) the head of the spherical roller 3, and it is possible to surely prevent, when the spherical roller 3 gets skewed, the skew by further stably controlling the posture of the spherical roller 3, and to attain a long life thereof by reducing emission of the heat and the abrasion when the bearing rotates.

By the way, the maximum diameter Dmax of the flange 9 of the cage 4 basically must be smaller than the minimum inside diameter Dmin of the outer ring 1 in terms of assembly of the bearing.

With the large-area protruded portion 20 being provided in the vicinity of the roller head of the flange 9 of the cage 4, however, if the maximum diameter Dmax of the flange 9 becomes greater than the minimum inside diameter Dmin of the outer ring 1, as shown in FIG. 4, truncated protruded portions 120a, 120b are formed by cutting off part of the maximum diametrical portions of the flange 9, to be specific, these truncated protruded portions 120a, 120b being formed in a way that truncates two pieces of protruded portions taking a face-to-face relationship with each other in, e.g., a diametrical direction. If a distance L between the vertexes of these truncated protruded portions 120a, 120b is set less than the minimum inside diameter Dmin (L < Dmin) of the outer ring 1, the bearing can be assembled by right-angle assembly. Note that only one protruded portion 20 may be partially cut off, or symmetric positions of the two protruded portions facing each other in the radial direction may also be partially cut off, depending on a size thereof. Further, if the outer ring 1 is elastically deformed without even cutting off in the way described above, the bearing can be assembled by the right-angle assembly.

### (Second Embodiment)

FIG. 5 is a sectional view of the self-aligning roller bearing according to a second embodiment of the present invention.

FIG. 6A is an enlarged sectional view (taken along the line VIa-VIa in FIG. 7B) of the cage shown in FIG. 5. FIG. 6B is an enlarged sectional view of an encircled portion b in FIG. 6A.

FIG. 7A is a view taken along the arrowhead line VIIa in FIG. 6A. FIG. 7B is a view taken along the arrowhead line VIIb in FIG. 6A. FIG. 7C is an enlarged view of an encircled portion c in FIG. 7A.

FIG. 8 is a schematic view of a blank press-out configuration of the cage.

FIG. 9 is a schematic view of the cage depicted in FIG. 5.

The second embodiment has the same basic structure as in the first embodiment, and hence the description will be focused on only different points.

As illustrated in FIG. 8, the protruded portion 20 is formed in a shape of petals spreading out (protruding) toward the outside diameter by punching out the blank in the shape of petals when conducting the press punch-out work thereof. This configuration enables a press working face to be diminished and a pressing force to be reduced.

As a result of forming the protruded portion 20 in the shape of petals protruding toward the outside diameter, as shown in FIG. 5, the maximum diameter Dmax of the flange 9 is larger than the minimum inside diameter Dmin of the outer ring 1. Namely, the maximum diameter of the protruded portion 20 is greater than in the first embodiment.

The bearing assembly in this case can be done by the right-angle assembly in a way that takes, as in the case of the first embodiment, the configuration that the maximum diametrical portions of the flange 9 are partially cut off as illustrated in FIG. 9, specifically, in a way that forms the truncated protruded portions 120a, 120b by cutting off the respective vertexes of the two protruded portions facing each other in the diametrical direction and setting the distance L between the vertexes of these truncated protruded portions 120a, 120b less than the minimum inside diameter Dmin (L < Dmin) of the outer ring 1. Note that only one protruded portion 20 may be partially cut off, or the symmetric positions of the two protruded portions facing each other in the radial direction may also be partially cut off, depending on the size thereof.

From what has been discussed so far, also in the second embodiment, the flange 9 of the cage 4, since the protruded portion 20 having the large area is provided on the side of the head of the spherical roller 3 and the maximum diameter of the protruded portion 20 is larger than in the first embodiment, has the increased proportion of area slidably abutting on or brought into contact with the head of the spherical roller 3, and it is possible to surely prevent, when the spherical roller 3 gets skewed, the skew by further stably controlling the posture of the spherical roller 3, and to attain a long life thereof t by reducing emission of the heat and the abrasion when the bearing rotates.

### (Third Embodiment)

FIG. 14 is a sectional view of the self-aligning roller bearing according to a third embodiment of the present invention.

FIG. 15 is an enlarged sectional view (taken along the line XV-XV in FIG. 18) of the cage shown in FIG. 14.

FIG. 16A is an enlarged sectional view of an encircled portion XVIa in FIG. 15. FIG. 16B is an enlarged sectional view of the flanges disposed in the face-to-face relationship with each other as shown in FIG. 14.

FIG. 17A is a view taken along the arrowhead line XVIIa in FIG. 15. FIG. 17B is an enlarged sectional view of the flanges disposed in the face-to-face relationship with each other as shown in FIG. 14. FIG. 17C is an enlarged view of an encircled portion c in FIG. 17A.

FIG. 18 is a view taken along the arrowhead line XVIII in FIG. 15.

FIG. 19 is a sectional view (taken along the line XIX-XIX in FIG. 18) of the self-aligning roller bearing according to the third embodiment of the present invention.

The third embodiment has the same basic structure as in the first embodiment, and hence the explanation will be focused on only different points.

In the third embodiment, the self-aligning roller bearing used under the severe working conditions such as the high-speed rotations involves adopting the [circulation oil supply method], wherein the oil is supplied via the oil supply hole 12 bored in the radial direction in the central portion of the outer ring 1 in order to supply the bearing with the oil.

One-sided face of the flange 9 is formed with a pair of protruded portions 10, 10 each having a large area and spaced away from each other in the peripheral direction.

A recessed portion 31 is provided on the rear face side of the protruded portion 30 formed by the press working. As shown in FIG. 19, the lubricant flows in between the pair of recessed portions 31, 31 via the oil supply hole 12 of the outer ring 1.

Now, in the third embodiment, as depicted in FIG. 16B etc, the pair of recessed portions 31, 31 extend through up to the inside diameter side from the outside diameter side.

Accordingly, as shown in FIG. 19 etc, the pair of recessed portions 31, 31 formed in the rear face of the protruded portion 30 communicate with the oil supply hole 12 of the outer ring 1 and extend through up to the inside diameter side from the outside diameter side. Therefore, the lubricant supplied via the oil supply hole 12 of the outer ring 1 can be also supplied stably to the raceway face of the inner ring 2 via the through-portion of the pair of recessed portions 31, 31. This enables lubricating performance to be further improved and the long life thereof to be attained by reducing the emission of the heat and the abrasion when the bearing rotates.

Moreover, in the third embodiment, as a result of the pair of recessed portions 31, 31 extending though up to the inside diameter side, the surface area of the protruded portion 30 becomes larger than in the prior arts (FIG. 20 etc).

Hence, the flange 9 of the cage 4, since the protruded portion 30 having the large area is provided on the side of the head of the spherical roller 3, has the increased proportion of the area slidably abutting on or brought into contact with the head of the spherical roller 3, and it is possible to surely prevent, when the spherical roller 3 gets skewed, the skew by further stably controlling the posture of the spherical roller 3, and to attain a long life thereof by reducing emission of the heat and the abrasion when the bearing rotates.

It should be noted that the present invention can be modified in a variety of forms without being limited to the embodiments discussed above.

## Claims

1. A self-aligning roller bearing comprising:
an outer ring having a raceway taking a shape of circular arc and formed along its inner periphery;
an inner ring having a raceway disposed in a face-to-face relationship with the inner periphery sided raceway face of said outer ring and formed along its outer periphery;
two rows of spherical rollers interposed between the inner periphery sided raceway face of said outer ring and the outer periphery sided raceway face of said inner ring; and
a cage holding said two rows of spherical rollers,
wherein a flange of said cage includes a protruded portion having a large area on the side of a head of said spherical roller.

2. A self-aligning roller bearing according to claim 1, wherein said protruded portion is formed by press working.

3. A self-aligning roller bearing according to claim 1 or 2, wherein said protruded portion is formed in a shape of petals protruding toward an outside diameter by punching out a blank in the shape of petals when conducting a press punching work.

4. A self-aligning roller bearing according to claim 1 or 2, wherein if a minimum inside diameter of said outer ring is larger than a flange maximum diameter of said cage, said cage is formed in such a shape that part of the flange maximum diametrical portion is cut off.

5. A self-aligning roller bearing according to claim 3, wherein if a minimum inside diameter of said outer ring is larger than a flange maximum diameter of said cage, said cage is formed in such a shape that part of the flange maximum diametrical portion is cut off.

6. A self-aligning roller bearing comprising:
an outer ring having a raceway taking a shape of circular arc and formed along its inner periphery;
an inner ring having a raceway disposed in a face-to-face relationship with the inner periphery sided raceway face of said outer ring and formed along its outer periphery;
two rows of spherical rollers interposed between the inner periphery sided raceway face of said outer ring and the outer periphery sided raceway face of said inner ring; and
a cage holding said two rows of spherical rollers,
a central portion of said outer ring being formed with an oil supply hole, for supplying oil, extending in a radial direction,
wherein a flange of said cage includes a protruded portion on the side of a head of said spherical roller, and
a recessed portion formed in a rear face of the protruded portion communicates with the oil supply hole of said outer ring and extends through up to an inside diameter side from an outside diameter side.

7. A self-aligning roller bearing according to claim 6, wherein the protruded portion or the recessed portion is formed by press working.
